# EUROPÄISCHE PATENTSCHRIFT

(11) **EP 1 469 363 B1**
(45) Veröffentlichungstag und Bekanntmachung des Hinweises auf die Patenterteilung: **24.02.2010**
(21) Anmeldenummer: 04000456.6
(22) Anmeldetag: 12.01.2004
(51) Int. Cl.: G05B 19/042, G05B 23/02

(54) **Anzeige von Informationen über ein Anlagenteil einer Industrieanlage auf einem mobilen Display**
Display of information regarding a part of a plant on a mobile display
Affichage d'informations concernant une partie d'une installation sur un écran mobile

(30) Priorität: 14.04.2003 DE 10317139
(43) Veröffentlichungstag der Anmeldung: 20.10.2004
(60) Teilanmeldung: 08020997.6
(73) Patentinhaber: SIEMENS AKTIENGESELLSCHAFT, 80333 München (DE)
(72) Erfinder: Bieber, Jürgen, 76275 Ettlingen (DE)

(56) Entgegenhaltungen:
- EP-A- 0 846 991
- DE-A- 4 123 043
- US-A- 6 167 464
- US-A1- 2002 107 586

## Beschreibung

Die Erfindung betrifft ein Verfahren und eine Vorrichtung zur Anzeige von ein Anlagenteil einer Industrieanlage betreffenden Informationen auf einem mobilen Display.

Im Zusammenhang mit industriellen Produktions- und Fertigungsanlagen, deren Anlagenteile örtlich weit voneinander entfernt angeordnet sein können, ist es bereits bekannt, mobile Anzeigegeräte zu verwenden. Diese Anzeigegeräte weisen ein Display auf, auf welchem Informationen über das jeweilige Anlagenteil in Form von Bildern und alphanumerischen Daten angezeigt werden. Diese angezeigten Informationen können eine Detailansicht des Anlagenteils, alphanumerische Informationen wie Prozessdaten, Anweisungen an den Bediener und Alarminformationen und den Anlagenteil betreffende Kurven enthalten.

Um zu diesen Informationen zu gelangen, muss der Bediener die Daten, die zum jeweiligen Anlagenteil gehören, manuell von einer zugehörigen zentralen Auswertestation abrufen. Dazu benötigt er Kenntnisse über den Aufbau der gesamten Industrieanlage, die unter anderem mehrere zentrale Auswertestationen aufweisen kann. Anhand dieser Kenntnisse muss er in der in der Auswertestation hinterlegten Datenbank navigieren, um an die dem gewünschten Anlagenteil zugehörigen Daten zu gelangen. Dies ist umständlich und zeitaufwendig. Weiterhin ist dabei nachteilig, dass der Bediener Kenntnisse über den Aufbau der Industrieanlage benötigt, insbesondere auch Kenntnisse von der Projektierung und einer visualisierten Anlagenführung.

Ein derartiges Szenario ist beispielsweise in der WO 02/075466 A2 beschrieben. Gegenstand der dortigen Ausführungen ist eine Bedienung und/oder Beobachtung der eine Anlagen-Steuerung überwachenden Einrichtung. Diese weist ein mit einer Anlage gekoppeltes Steuergerät an wenigstens einem abgesetzten, mit der Überwachungseinrichtung kommunizierenden Bediengerät auf. Im Rahmen der Überwachungseinrichtung oder eines an diese angeschlossenen Gerätes ist ein zusätzlicher Funktionsblock vorgesehen, insbesondere in Form eines zusätzlichen Programmes. Der zusätzliche Funktionsblock schaltet sich nach Art eines Schnittstellenbausteins in die Kommunikation zwischen der Überwachungseinrichtung oder einem Überwachungs-Funktionsblock einerseits und den angeschlossenen Bediengeräten andererseits ein, wertet die an ein angeschlossenes Bediengerät gerichteten Informationen aus und bereitet sie derart auf, dass die sodann weitergeleiteten Informationen von dem betreffenden Bediengerät nach Art eines Terminal direkt angezeigt werden können. Die Verbindung zwischen einem zentralen Bedienungs- und Überwachungsgerät bzw. einem Server und einem dezentral angeordneten Bediengerät bzw. Client-Rechner kann über sternförmig beim Server zusammenlaufende Datenleitungen, über ein Netzwerk mit einer Ringstruktur, wobei jeder angeschlossene Client-Rechner eine individuelle Adresse besitzt, über Infrarot- oder Funksschnittstellen, über ein nationales Datennetz oder über ein internationales Datennetz erfolgen, wobei die Kommunikation bei Bedarf auch mittels Satelliten über Ozeane hinweg geführt werden kann.

Aus der US-A-6,167,464 ist ein Verfahren zur Darstellung eines Bildsignals auf dem Display eines mobilen Anzeigegerätes bekannt. Bei diesem bekannten Verfahren ist in einer Industrieanlage eine Vielzahl von Maschinen vorgesehen, die über I/O-Module mit einem zentralen Prozessor verbunden sind, der seinerseits an ein Computerterminal angeschlossen ist. Jeder Maschine ist ein Sender zugeordnet, der einen der jeweiligen Maschine zugeordneten Lokalisierungscode aussendet. Weiterhin ist beim Stand der Technik ein tragbares Terminal vorgesehen, mit dem ein Benutzer sich in die Nähe einer Maschine der Industrieanlage begeben kann. Dort empfängt das tragbare Terminal automatisch den vom Sender ausgesendeten Lokalisierungscode und sendet ihn über eine zwischen dem tragbaren Terminal und dem zentralen Prozessor vorgesehene Funkstrecke an den zentralen Prozessor. Dieser adressiert mittels des genannten Lokalisierungscodes einen Speicher, in welchem der jeweils zugehörigen Maschine zugeordnete Daten abgespeichert sind, liest diese Daten aus dem Speicher aus und überträgt sie zum tragbaren Terminal, auf dessen Display sie dargestellt werden.

Der Erfindung liegt die Aufgabe zugrunde, die bei der bekannten Anlage vorgesehene Kommunikation zu verbessern.

Diese Aufgabe wird durch ein Verfahren mit den im Anspruch 1 angegebenen Merkmalen und eine Vorrichtung mit den im Anspruch 5 angegebenen Merkmalen gelöst. Vorteilhafte Ausgestaltungen und Weiterbildungen der Erfindung ergeben sich aus den abhängigen Ansprüchen.

Die Vorteile der Erfindung bestehen insbesondere darin, dass ein Bediener automatisch dem Anlagenteil, in bzw. bei dem er sich momentan aufhält, zugehörige Informationen als Bildsignal auf dem Display des mobilen Anzeigegerätes angezeigt bekommt, wobei die Prioritätszuordnung konfigurierbar ist. Dies erhöht den Komfort von Bedien-, Service- und Diagnosearbeiten in komplexen Industrieanlagen. Insbesondere kann eine Diagnose des Zustands eines Anlagenteils vor Ort schnell und präzise erfolgen. Diese Diagnose kann auch von weniger qualifiziertem Personal vorgenommen werden, da im Unterschied zum Stand der Technik kein umständliches, schrittweise erfolgendes Abrufen von Daten aus einer Zentrale notwendig ist. Vielmehr erlaubt die Erfindung eine mobil vor Ort erfolgende Direkteinsicht in dem jeweiligen Anlagenteil zugehörige Informationen, deren Anzeige automatisch als Folge der Aussendung eines den Anlagenteil spezifizierenden Kennsignals herbeigeführt wird. Werden die Kennsignale in Form von Funksignalen ausgesendet, dann wird die automatische Anzeige der dem Anlagenteil zugehörigen Informationen in die Wege geleitet, sobald der Benutzer mit seinem mobilen Anzeigegerät in die Nähe des Anlagenteils kommt.

Kommt es aufgrund einer Ausstrahlung von Funksignalen mehrerer Anlagenteile zu zeitlichen Überlappungen, dann erfolgt eine automatische Zuordnung unterschiedlicher Prioritäten zu den empfangenen Funksignalen. Diese Zuordnung ist vom Bediener konfigurierbar. Beispielsweise hat er die Möglichkeit, dem das Anlagenteil spezifizierende Funksignal zusätzliche Informationen zuzusetzen, die beispielsweise ein Signalisieren eines Notfalls, ein Signalisieren eines Fehlers oder ein Signalisieren eines störungsfreien Zustandes betreffen, und einem Notfall eine höhere Priorität zuzuordnen als einer einfachen Fehlermeldung und dieser wiederum eine höhere Priorität zuzuordnen als dem störungsfreien Zustand. Treffen gleichzeitig Funksignale unterschiedlicher Prioritäten am mobilen Anzeigegerät ein, dann wird automatisch das Funksignal mit der höchsten Priorität oder ein daraus abgeleitetes Übertragungssignal zuerst an die zentrale Auswertestation weitergeleitet. Diese überträgt daraufhin automatisch Informationen, die den das Funksignal mit der höchsten Priorität ausstrahlenden Anlagenteil betreffen, an das Anzeigegerät zurück, so dass diese auf dem Display angezeigt werden können. Eine Übertragung von Funksignalen mit niedriger Priorität wird vorerst zurückgestellt.

Gemäß einer Ausführungsform der Erfindung strahlt der Funksender des Anlagenteils das den Anlagenteil spezifizierende Funksignal permanent und pulsierend aus.

Gemäß einer anderen Ausführungsform der Erfindung strahlt der Funksender des Anlagenteils das den Anlagenteil spezifizierende Funksignal nur beim Vorliegen einer Störung im Anlagenteil aus. Dadurch wird vermieden, dass innerhalb einer Anlage gleichzeitig unnötig viele Funksignale ausgestrahlt werden.

Eine vorteilhafte Weiterbildung der Erfindung besteht darin, eine erste Betriebsart vorzusehen, bei welcher der Funksender des Anlagenteils das den Anlagenteil spezifizierende Funksignal permanent und pulsierend ausstrahlt, eine zweite Betriebsart vorzusehen, bei welcher der Funksender des Anlagenteils das den Anlagenteil spezifizierende Funksignal nur beim Vorliegen einer Störung des Anlagenteils ausstrahlt, und eine Umschaltmöglichkeit zwischen den beiden genannten Betriebsarten vorzusehen.

Die Vorteile einer Vorrichtung mit den im Anspruch 5 angegebenen Merkmalen bestehen darin, dass der Bediener bei einem Vorliegen mehrerer Auswertestationen sich nicht darum kümmern muss, von welcher dieser Stationen er die jeweils gewünschten Informationen abrufen muss. Dies wird automatisch durch eine Auswertung des jeweils übertragenen Funksignals erkannt.

Weitere vorteilhafte Eigenschaften der Erfindung ergeben sich aus der Erläuterung von Ausführungsbeispielen anhand der Figuren. Es zeigt
- Figur 1: ein Blockschaltbild einer Vorrichtung, auf der die Erfindung basiert, gemäß einem ersten Beispiel,
- Figur 2: ein Blockschaltbild der Vorrichtung, auf der die Erfindung basiert, gemäß einem zweiten Beispiel und
- Figur 3: ein Blockschaltbild einer Vorrichtung gemäß einem Ausführungsbeispiel der Erfindung.

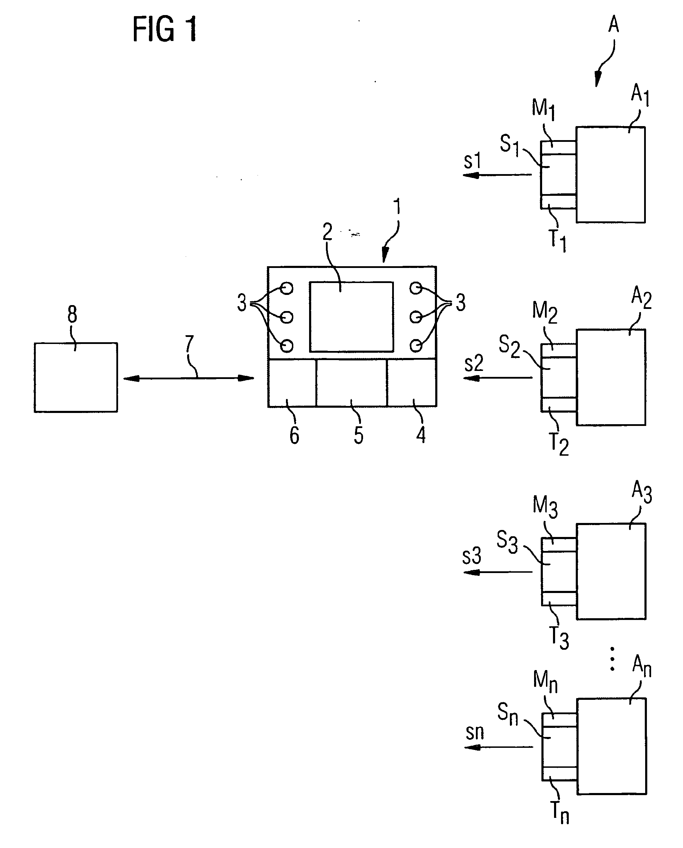

Die Figur 1 zeigt ein Blockschaltbild einer Vorrichtung auf der die Erfindung basiert. Die dargestellte Vorrichtung weist eine zentrale Auswertestation 8 auf, in welcher alle wesentlichen Daten gespeichert sind, die zu einer Industrieanlage A gehören. Zu diesen wesentlichen Daten gehören im Rahmen der Projektierung erstellte Bilder von Anlagenteilen und den Anlagenteilen zugehörige Prozessdaten, wobei diese Prozessdaten der zentralen Auswertestation im Laufe des Prozesses zugeführt werden. Zu den wesentlichen Daten gehört weiterhin ein den jeweiligen Anlagenteil individuell spezifizierendes Ortskennzeichen, welches den Standort des Anlagenteiles beschreibt. Anlagenteile sind beispielsweise Kessel, Regler und Ventile. Ein Beispiel für ein Ortskennzeichen lautet wie folgt:
"Kessel 22-Bierpulver-Halle 22-Sektor7-Raum 18-Quadrat C9".

Die zentrale Auswertestation 8 ist über eine Übertragungsstrecke 7 mit einem mobilen Anzeigegerät 1 verbunden. Bei der Übertragungsstrecke 7 handelt es sich um eine drahtlose Übertagungsstrecke, über welche Signale über große Entfernungen übertragen werden können. Das mobile Anzeigegerät ist ein kleines Handgerät, welches von einer Bedienperson in der Hand getragen und bedient werden kann. Beispielsweise handelt es sich beim Anzeigegerät 1 um einen sogenannten persönlichen digitalen Assistenten (PDA), ein Handy oder einen mobilen Industriekommunikator. Mobile Industriekommunikatoren werden von der Anmelderin unter der Bezeichnung MOBIC^{®} am Markt angeboten und werden üblicherweise zu einer Erfassung von Qualitätsdaten, zu einer Einsicht in Ersatzteillisten, zu einer Sichtbarmachung von Prozesszuständen, zu einer Quittierung von Arbeitsaufträgen oder zu einem Empfangen von detaillierten Einsatzplänen im mobilen Einsatz verwendet.

Das in der Figur 1 gezeigte mobile Anzeigegerät 1 weist ein Display 2, eine Bedientastatur 3, einen Funkempfänger 4, einen Controller 5 und eine Sende- und Empfangseinheit 6 auf. Letztere ist zur Ausgabe von Signalen an die Übertragungsstrecke 7 und zum Empfang von Signalen vorgesehen, die von der zentralen Auswertestation 8 über die Übertragungsstrecke 7 an das mobile Anzeigegerät 1 ausgesendet werden. Der Funkempfänger 4 dient zum Empfang von Signalen, die vom Funksender eines Funkmoduls ausgestrahlt werden, welches am oder in einem Anlagenteil einer Industrieanlage A angeordnet ist.

Die dargestellte Industrieanlage A weist Anlagenteile A₁, ..., An auf. Dem Anlagenteil A₁ ist ein Funksender S₁, dem Anlagenteil A₂ ein Funksender S₂, dem Anlagenteil A₃ ein Funksender S₃ und dem Anlagenteil An ein Funksender Sₙ zugeordnet. Jeder dieser Funksender ist Bestandteil eines Funkmoduls. Der Funksender S₁ strahlt Funksignale s1 aus. Der Funksender S₂ strahlt Funksignale s2 aus. Der Funksender S₃ strahlt Funksignale s3 aus und der Funksender Sₙ strahlt Funksignale sn aus. Die Reichweite der von diesen Funksendern ausgestrahlten Funksignale ist jeweils gering, so dass der Funkempfänger 4 des mobilen Anzeigegerätes 1 die von einem der genannten Funksender ausgestrahlten Signale nur dann empfangen kann, wenn das mobile Anzeigegerät 1 in die Nähe des jeweiligen Anlagenteils gebracht wird.

Möchte eine Bedienperson einen der Anlagenteile vor Ort bedienen, warten oder kontrollieren, dann begibt sie sich mit dem Anzeigegerät 1 in unmittelbare Nähe dieses Anlagenteils. In der Figur 1 ist das Anzeigegerät 1 in unmittelbarer Nähe des Anlagenteils A₂ positioniert. In dieser Position ist der Funkempfänger 4 des Anzeigegerätes dazu in der Lage, die vom Funksender S₂ ausgestrahlten Funksignale s2 zu empfangen. Diese Funksignale s2 spezifizieren den Anlagenteil A2. Sie enthalten ein Ortskennzeichen, das den Standort des Anlagenteils A2 beschreibt.

Das vom Funkempfänger 4 empfangene Funksignal oder ein daraus abgeleitetes Übertragungssignal wird von der Sende- und Empfangseinheit 6 an die Übertragungsstrecke 7 weitergegeben und über diese an die zentrale Auswertestation 8 weitergeleitet. Diese erkennt anhand des übertragenen Signals, dass sich das Anzeigegerät derzeit in der Nähe des Anlagenteils A₂ befindet und sendet über die Übertragungsstrecke 7 das Anlagenteil A₂ betreffende Informationen an das Anzeigegerät 1 zurück. Zu diesen übertragenen Informationen gehören beispielsweise eine im Rahmen der Projektierung der Industrieanlage erstellte graphische Ansicht des Anlagenteils, dem Anlagenteil zugehörige alphanumerische Daten und dem Anlagenteil zugehörige aktuelle Prozessdaten, die in der zentralen Auswertestation 8 verfügbar sind. Diese über die Übertragungsstrecke 7 zurückgesandten Informationen werden von der Sende- und Empfangseinheit 6 des Anzeigegerätes 1 empfangen und dann entweder direkt oder nach einer ggf. notwendigen Signalaufbereitung auf dem Display 2 des Anzeigegerätes 1 angezeigt.

Alle vorstehend beschriebenen Vorgänge laufen automatisch ab, sobald das den Anlagenteil A₂ spezifizierende Funksignal s2 vom Funkempfänger 4 des Anzeigegerätes 1 empfangen wird. Für eine Bedienperson besteht folglich keinerlei Notwendigkeit, die das Anlagenteil A₂ betreffenden Informationen durch Bedienvorgänge an der Tastatur 3 des Anzeigegerätes 1 und ein Navigieren in einer in der zentralen Auswerteeinheit 8 hinterlegten Datenbank Schritt für Schritt abzurufen. Dies stellt im Vergleich zu bisher bekannten Lösungen eine wesentliche Vereinfachung für den jeweiligen Bediener dar. Insbesondere benötigt dieser keine Detailkenntnisse vom Gesamtaufbau der Industrieanlage und keine Detailkenntnisse der erfolgten Projektierung der Anlage. Weiterhin spart er Zeit, da die gewünschten Informationen beim erfindungsgemäßen Vorgehen wesentlich schneller am Display 2 dargestellt werden als beim Stand der Technik.

Gemäß einer ersten Ausführungsform strahlen die Funksender S₁...Sₙ ihre Funksignale ständig pulsierend aus. Dies hat den Vorteil, dass die Funksignale zu jedem beliebigen Zeitpunkt empfangbar sind. Notwendig ist lediglich, dass das Anzeigegerät 1 in die Nähe des jeweiligen Anlagenteils gebracht wird.

Gemäß einer zweiten Ausführungsform strahlen die Funksender S₁...Sₙ ihre Funksignale nur dann ab, wenn im jeweiligen Anlagenteil eine Störung vorliegt. Beispielsweise wird der zentralen Auswertestation 8 von einem Sensor eines Anlagenteils eine Störung gemeldet. Aufgrund dieser Störungsmeldung wird ein Servicetechniker, der mit einem Anzeigegerät 1 ausgestattet ist, zu dem Anlagenteil geschickt, in welchem die Störung vorliegt. Sobald sich der Servicetechniker im Empfangsbereich der das gestörte Anlagenteil spezifizierenden Funksignale befindet, werden diese vom Funkempfänger 4 des Anzeigegerätes 1 empfangen. Als Folge davon werden automatisch dem gestörten Anlagenteil zugehörige Informationen auf dem Display 2 des Anzeigegerätes 1 angezeigt. Zu diesen Informationen gehören eine graphische Darstellung des Anlagenteils und alphanumerische und/oder bildliche Anweisungen für das erforderliche Vorgehen bei der Beseitigung der Störung.

Der Vorteil der zweiten Ausführungsform, gemäß welcher die Funksignale nur beim Vorliegen einer Störung eines Anlagenteils ausgestrahlt werden, bestehen insbesondere darin, dass innerhalb der Industrieanlage nicht unnötig viele Funksignale ausgestrahlt werden.

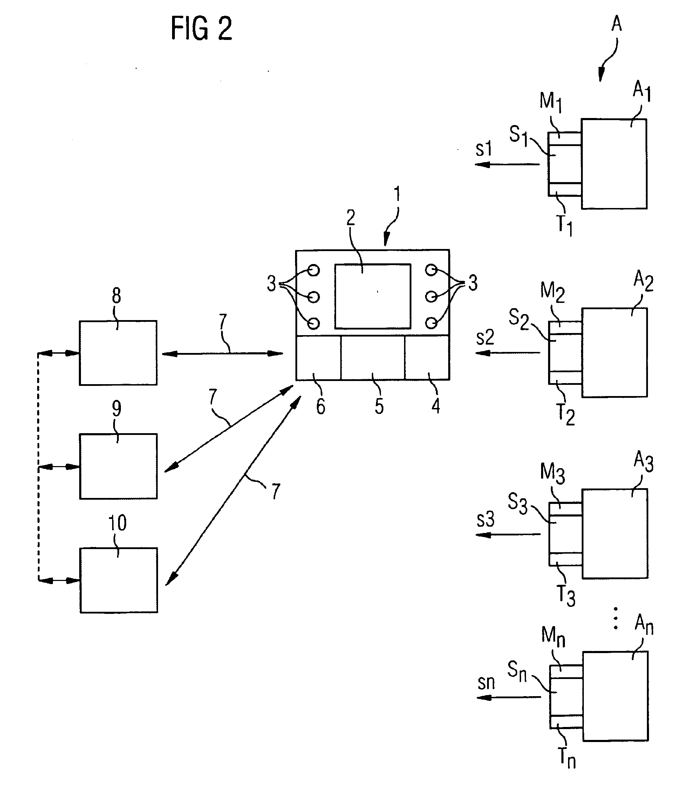

Die Figur 2 zeigt ein Blockschaltbild einer Vorrichtung gemäß einem zweiten Beispiel, auf der die Erfindung basiert.

Die in der Figur 2 dargestellte Vorrichtung unterscheidet sich von der in der Figur 1 dargestellten Vorrichtung dadurch, dass sie außer der Auswertestation 8 weitere Auswertestationen 9 und 10 aufweist, wie es in großen Industrieanlagen aus Kapazitätsgründen vorteilhaft ist. Die Auswertestationen 8, 9 und 10 stehen, wie es in der Figur 2 durch die gestrichelte Linie angedeutet ist, miteinander in Verbindung. Folglich kann zwischen den Auswertestationen bei Bedarf ein Austausch von Daten erfolgen.

In der Auswertestation 8 sind alle wesentlichen Daten gespeichert, die zum Anlagenteil A₁ der Industrieanlage gehören. Zu diesen wesentlichen Daten gehören eine im Rahmen der Projektierung erstellte graphische Ansicht des Anlagenteils A₁ und dem Anlagenteil A₁ zugehörige Prozessdaten, wobei diese Prozessdaten der Auswertestation 8 im Laufe des Prozesses zugeführt werden. Zu den wesentlichen Daten gehört weiterhin ein den Anlagenteil A₁ individuell spezifizierendes Ortskennzeichen, welches den Standort des Anlagenteils A₁ beschreibt.

In der Auswertestation 9 sind alle wesentlichen Daten gespeichert, die zum Anlagenteil A₂ der Industrieanlage gehören. Zu diesen wesentlichen Daten gehören eine im Rahmen der Projektierung erstellte graphische Ansicht des Anlagenteils A₂ und dem Anlagenteil A₂ zugehörige Prozessdaten, wobei diese Prozessdaten der Auswertestation 9 im Laufe des Prozesses zugeführt werden. Zu den wesentlichen Daten gehört weiterhin ein den Anlagenteil A₂ individuell spezifizierendes Ortskennzeichen, welches den Standort des Anlagenteils A₂ beschreibt.

In der Auswertestation 10 sind alle wesentlichen Daten gespeichert, die zu den Anlagenteilen A₃...Aₙ gehören. Zu diesen wesentlichen Daten gehören im Rahmen der Projektierung erstellte graphische Ansichten der Anlagenteile A₃...Aₙ und den Anlagenteilen zugehörige Prozessdaten, wobei diese Prozessdaten der Auswertestation 10 im Laufe des Prozesses zugeführt werden. Zu den wesentlichen Daten gehören weiterhin die Anlagenteile A₃...Aₙ jeweils individuell spezifizierende Ortskennzeichen, welche die Standorte der Anlagenteile beschreiben.

Die Auswertestationen 8, 9 und 10 sind jeweils über eine Übertragungsstrecke 7 mit einem mobilen Anzeigegerät 1 verbunden. Bei der Übertragungsstrecke 7 handelt es sich um eine drahtlose Übertragungsstrecke, über welche Signale über große Entfernungen übertragen werden können. Das mobile Anzeigegerät 1 ist ebenso wie beim Ausführungsbeispiel gemäß Figur 1 ein kleines Handgerät, welches von einer Bedienperson in der Hand getragen und bedient werden kann. Es weist ein Display 2, eine Bedientastatur 3, einen Funkempfänger 4, einen Controller 5 und eine Sende- und Empfangseinheit 6 auf. Letztere ist zur Ausgabe von Signalen an eine der Übertragungsstrecken 7 und zum Empfang von Signalen vorgesehen, die von einer der Auswertestationen 8, 9, 10 über eine der Übertragungsstrecken 7 an das mobile Anzeigegerät 1 gesendet werden. Der Funkempfänger 4 dient zum Empfang von Signalen, die vom Funksender eines Funkmoduls ausgestrahlt werden, welches am oder in einem Anlagenteil einer Industrieanlage A angeordnet ist.

Der Aufbau der Industrieanlage A gemäß Figur 2 stimmt mit dem Aufbau der Industrieanlage A gemäß Figur 1 überein.

Ein Unterschied zwischen der in der Figur 2 dargestellten Vorrichtung und der in der Figur 1 dargestellten Vorrichtung besteht darin, dass der Controller 5 die Funktion einer Auswerteeinheit aufweist, die anhand des jeweils empfangenen Funksignals ermittelt, in welcher der Auswertestationen 8, 9 oder 10 die dem das Funksignal ausstrahlenden Anlagenteil zugehörigen Informationen verfügbar sind. Eine diesbezügliche Information ist beispielsweise im Funksignal enthalten, das vom jeweiligen Anlagenteil ausgestrahlt wird. Hat die Auswerteeinheit 5 die jeweils zuständige Auswertestation ermittelt, dann leitet sie das empfangene Funksignal oder ein daraus abgeleitetes Übertragungssignal über die zugehörige Übertragungsstrecke 7 an die ermittelte Auswerteeinheit weiter. Diese identifiziert anhand des übertragenen Signals den das Funksignal aussendenden Anlagenteil und sendet über die Übertragungsstrecke 7 dem Anlagenteil zugehörige Informationen an das Anzeigegerät 1 zurück, so dass diese Informationen auf dem Display 2 des Anzeigegerätes 1 dargestellt werden können.

Eine Alternative zu der vorstehend beschriebenen Vorrichtung besteht darin, dass das Anzeigegerät 1 das empfangene Funksignal oder ein daraus abgeleitetes Signal an die nächstliegende Auswertestation weiterleitet. Diese ruft in dem Fall, dass die gewünschten Informationen in einer der anderen Auswertestationen verfügbar sind, die gewünschten Informationen aus der jeweiligen anderen Auswertestation ab und überträgt sie dann an das mobile Anzeigegerät 1 zurück, auf dessen Display sie angezeigt werden.

Gemäß diesem Ausführungsbeispiel werden folglich die benötigen Informationen automatisch aus der jeweils zugehörigen Auswertestation abgerufen. Der Bediener benötigt keinerlei Informationen darüber, in welcher Auswertestation die zu einem bestimmten Anlagenteil gehörigen Informationen verfügbar sind.

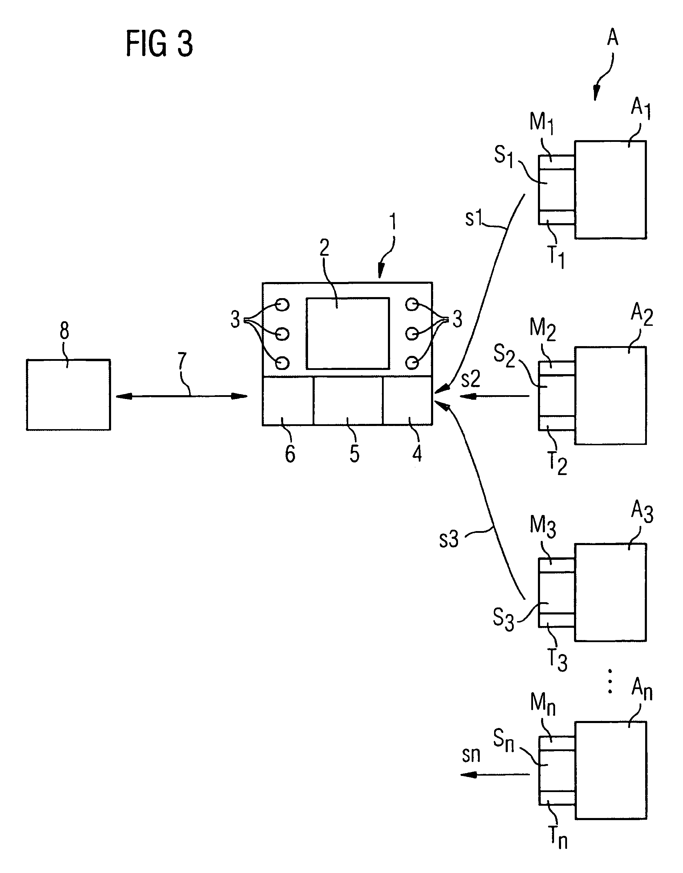

Die Figur 3 zeigt ein Blockschaltbild einer erfindungsgemäßen Vorrichtung.

Die in der Figur 3 dargestellte Vorrichtung unterscheidet sich erfindungsgemäß von der in der Figur 1 dargestellten Vorrichtung dadurch, dass die Anlagenteile A₁, A₂ und A₃ nahe beieinander angeordnet sind. Dies führt dazu, dass der Funkempfänger 4 des mobilen Anzeigegerätes 1 von den Funksendern S₁, S₂ und S₃ ausgestrahlte Funksignale gleichzeitig empfangen kann.

Um die damit verbundene Problematik zu beseitigen, weist der Controller 5 des Anzeigegerätes 1 eine Kollisionserkennungskomponente auf, die im Falle eines Empfangs mehrerer verschiedener Funksignale den empfangenen Funksignalen automatisch unterschiedliche Prioritäten zuordnet.

Eine erste Möglichkeit einer Prioritätszuordnung besteht darin, dass den einzelnen Anlagenteilen als solchen unterschiedliche Prioritäten zugeordnet werden. Im Falle einer Kollision wird denjenigen Funksignalen, die vom Anlagenteil mit der höchsten Priorität ausgestrahlt werden, ihrerseits die höchste Priorität zugeordnet. Diese Funksignale oder daraus abgeleitete Signale werden zuerst an die zentrale Auswerteeinheit 8 weitergeleitet. Diese sendet daraufhin zugehörige Informationen an das mobile Anzeigegerät 1 zur Darstellung auf dem Display 2 zurück. Eine Übertragung der Signale niedrigerer Priorität wird vorerst zurückgestellt und zu einem späteren Zeitpunkt nachgeholt.

Eine zweite Möglichkeit einer Prioritätszuordnung besteht darin, im jeweils ausgestrahlten Funksignal eine weitere Kennung zu übertragen, welche Auskunft über den Betriebszustand des jeweiligen Anlagenteils gibt. Beispielsweise enthält die Kennung eine Information darüber, ob im Anlagenteil ein Notfall aufgetreten ist, ob im Anlagenteil ein kleinerer Fehler aufgetreten ist, der gelegentlich beseitigt werden sollte, oder ob sich der Anlagenteil im störungsfreien Zustand befindet. Einem Notfall ist die höchste Priorität zugeordnet, einem fehlerhaften Betriebszustand eine mittlere Priorität und dem störungsfreien Zustand eine niedrige Priorität.

Wird beispielsweise vom Anlagenteil A₃ ein einen Notfall anzeigendes Funksignal, vom Anlagenteil A₂ ein einen Fehler anzeigenden Funksignal und vom Anlagenteil A₁ ein Funksignal ausgestrahlt, welches einen störungsfreien Zustand anzeigt, dann sorgt die Kollisionserkennungskomponente 5 dafür, dass das den Notfall anzeigende Funksignal oder ein daraus abgeleitetes Übertragungssignal als Erstes an die zentrale Auswertestation 8 weitergeleitet wird. Diese stellt zuerst dem Anlagenteil A₃ zugehörige Informationen zur Verfügung, die über die Übertragungsstrecke 7 an das Anzeigegerät 1 zurückübertragen und auf dessen Display 2 angezeigt werden. Die angezeigten Informationen enthalten ein graphische Darstellung des Anlagenteils A₃ sowie alphanumerische Hinweise zur Behebung des Notfalls. Eine Übertragung der Signale niedrigerer Priorität wird vorerst zurückgestellt und zu einem späteren Zeitpunkt nachgeholt.

Gemäß der Erfindung ist die vorstehend beschriebene Prioritätszuordnung vom Bediener mittels der Bedienelemente 3 des mobilen Anzeigegerätes 1 frei konfigurierbar. Beispielsweise kann er eine ursprünglich vorgenommene Prioritätszuordnung bei Bedarf verändern. Stellt sich im Betrieb der Industrieanlage heraus, dass alle Betriebszustände eines bestimmten Anlagenteils, die vom störungsfreien Betrieb dieses Anlagenteils abweichen, vorrangig zu beobachten sind, dann kann diesem Umstand durch eine geänderte Prioritätszuordnung Rechnung getragen werden.

Eine andere Variante der Vorrichtung, die nicht Gegenstand der Erfindung ist, besteht darin, das Anzeigegerät 1 mit einer Kollisionserkennungskomponente 5 auszustatten, die im Falle eines Empfangs mehrerer verschiedener Funksignale ein Auswahl-Bildsignal bereitstellt, das auf dem Display 2 angezeigt wird. In dieser Display-Darstellung kann der Bediener mittels der Bedienelemente 3 des Anzeigegerätes einen der Anlagenteile, von dem die kollidierenden Funksignale stammen, auswählen. Hat der Bediener diese Auswahl vorgenommen, dann wird zuerst das Funksignal des ausgewählten Anlagenteils oder ein aus diesem Funksignal abgeleitetes Übertragungssignal an die zentrale Auswerteeinheit 8 weitergeleitet. Diese sendet daraufhin zugehörige Informationen an das mobile Anzeigegerät 1 zur Darstellung auf dem Display 2 zurück. Eine Übertragung der Signale der nicht ausgewählten Anlagenteile wird vorerst zurückgestellt und zu einem späteren Zeitpunkt nachgeholt.

Bei den oben beschriebenen Ausführungsbeispielen wurde die den jeweiligen Anlagenteil spezifizierende Information als Funksignal an das Anzeigegerät 1 übertragen. Diese Übertragung per Funk ist wegen des geringen Aufwands und wegen der hohen Empfangssicherheit bevorzugt. Es ist aber auch möglich, die den jeweiligen Anlagenteil spezifizierenden Informationen auf andere Weise zum Anzeigegerät 1 zu übertragen, beispielsweise als Infrarotsignal.

## Patentansprüche

1. Verfahren zur Darstellung eines Bildsignals auf dem Display eines mobilen Anzeigegerätes (1), wobei
- das mobile Anzeigegerät (1) Bedienelemente (3) aufweist,
- von einem Sender eines Anlagenteils (A₁,...,Aₙ) einer Industrieanlage (A) ein Signal (s1,...,s6) ausgesendet wird, welches das Anlagenteil spezifiziert,
- das ausgesandte Signal von einem Empfänger (4) des Anzeigegerätes (1) empfangen wird,
- das empfangene Signal oder ein daraus abgeleitetes Übertragungssignal vom Anzeigegerät (1) automatisch an eine Auswertestation (8) weitergeleitet wird,
- die Auswertestation (8) automatisch dem Anlagenteil zugehörige Informationen an das Anzeigegerät (1) überträgt, und
- ein den Informationen entsprechendes Bildsignal automatisch auf dem Display (2) des Anzeigegerätes (1) dargestellt wird,
**dadurch gekennzeichnet, dass**
- im Falle eines Empfangs mehrerer verschiedener, von Sendern verschiedener Anlagenteile ausgesandter Signale den empfangenen Signalen automatisch unterschiedliche Prioritäten zugeordnet werden, wobei die Prioritätszuordnung von einem Bediener mittels der Bedienelemente des Anzeigegerätes konfigurierbar ist.

2. Verfahren nach Anspruch 1,
**dadurch gekennzeichnet,**
**dass** das den Anlagenteil spezifizierende Signal ein Funksignal ist und das Funksignal ständig pulsierend ausgestrahlt wird.

3. Verfahren nach Anspruch 1,
**dadurch gekennzeichnet,**
**dass** das den Anlagenteil spezifizierende Signal ein Funksignal ist und das Funksignal nur beim Vorliegen einer Störung des Anlagenteils ausgestrahlt wird.

4. Verfahren nach einem der vorhergehenden Ansprüche,
**dadurch gekennzeichnet,**
**dass** im mobilen Anzeigegerät anhand des empfangenen Signals eine dem das Signal aussendenden Anlagenteil zugehörige Auswertestation ermittelt wird und das Signal oder ein daraus abgeleitetes Übertragungssignal an die ermittelte Auswertestation weitergeleitet wird.

5. Vorrichtung zur Darstellung eines Bildsignals auf dem Display eines mobilen Anzeigegerätes, mit
- einem Sender (S₁,...,Sₙ), der an einem Anlagenteil (A₁,...,Aₙ) einer Industrieanlage (A) angeordnet und zur Aussendung eines das Anlagenteil spezifizierenden Signals (s1,...,sn) vorgesehen ist,
- einem Anzeigegerät (1), welches ein Display (2), Bedienelemente (3), einen Empfänger (4) und eine Sende- und Empfangseinheit (6) aufweist, wobei der Empfänger (4) zum Empfang der vom Sender (S₁,...,Sn) des Anlagenteils (A₁,...,Aₙ) ausgesandten Signale (s1,...,sn) und die Sende- und Empfangseinheit (6) zur automatischen Weiterleitung des empfangenen Signals oder eines daraus abgeleiteten Übertragungssignals an eine Auswertestation (8) vorgesehen ist,
- die Auswertestation (8) zum Empfang des vom Anzeigegerät (1) ausgesendeten Signals und zum automatischen Aussenden von dem Anlagenteil zugehörigen Informationen an das Anzeigegerät (1) vorgesehen ist, wobei
- die Sende- und Empfangseinheit (6) des Anzeigegerätes (1) zum Empfang der von der Auswertestation gesendeten Informationen und das Display (2) zur Darstellung eines diesen Informationen entsprechenden Bildsignals vorgesehen ist
**dadurch gekennzeichnet,**
**dass** das Anzeigegerät (1) eine Kollisionserkennungskomponente (5) aufweist, die im Falle eines Empfangs mehrerer verschiedener Signale den empfangenen Signalen automatisch unterschiedliche Prioritäten zuordnet, wobei die Prioritätszuordnung von einem Bediener mittels der Bedienelemente des Anzeigegerätes konfigurierbar ist.

6. Vorrichtung nach Anspruch 5,
**dadurch gekennzeichnet,**
**dass** das den Anlagenteil spezifizierende Signal ein Funksignal ist und ein Ortskennzeichen enthält, welches Informationen über den Standort des Anlagenteils in der Industrieanlage enthält.

7. Vorrichtung nach einem der Ansprüche 5 oder 6,
**dadurch gekennzeichnet,**
**dass** der Sender das Signal ständig pulsierend ausstrahlt.

8. Vorrichtung nach einem der Ansprüche 5 oder 6,
**dadurch gekennzeichnet,**
**dass** der Sender das Signal nur beim Vorliegen einer Störung ausstrahlt.

9. Vorrichtung nach Anspruch 8,
**dadurch gekennzeichnet,**
**dass** der Sender (S₁,...,Sₙ) Bestandteil eines Moduls (M₁,...,Mₙ) ist und das Modul ein Bedienelement (T₁,...,Tₙ) aufweist, mittels dessen der Sender in verschiedene Betriebsarten umschaltbar ist, wobei eine erste der Betriebsarten ein ständiges pulsierendes Aussenden des Signals und eine zweite der Betriebsarten eine Aussendung des Signals nur beim Vorliegen einer Störung ist.

10. Vorrichtung nach einem der Ansprüche 5 bis 9,
**dadurch gekennzeichnet,**
**dass** das mobile Anzeigegerät (1) eine Auswerteeinheit (5) aufweist, die anhand des empfangenen Signals eine dem das Signal aussendenden Anlagenteil zugehörige Auswertestation (8,9,10) ermittelt, und die Sende- und Empfangseinheit (6) des mobilen Anzeigegerätes (1) dazu vorgesehen ist, das Signal oder ein daraus abgeleitetes Übertragungssignal an die ermittelte Auswertestation weiterzuleiten.

## Claims

1. Method for presenting an image signal on the display of a mobile display unit (1), wherein
- the mobile display unit (1) has user elements (3),
- a transmitter in an installation portion (A₁, ..., Aₙ) of an industrial installation (A) sends a signal (s1, ..., s6) which specifies the installation portion,
- the sent signal is received by a receiver (4) of the display unit (1),
- the received signal or a transmission signal derived therefrom is automatically forwarded by the display unit (1) to an evaluation station (8),
- the evaluation station (8) automatically transmits information associated with the installation portion to the display unit (1), and
- an image signal corresponding to the information is automatically presented on the display (2) of the display unit (1),
**characterized in that**
- in the event of reception of a plurality of different signals sent by transmitters in different installation portions, the received signals are automatically allocated different priorities, the priority allocation being configurable by a user using the user elements of the display unit.

2. Method according to Claim 1,
**characterized**
**in that** the signal specifying the installation portion is a radio signal and the radio signal is emitted continually in pulsating fashion.

3. Method according to Claim 1,
**characterized**
**in that** the signal specifying the installation portion is a radio signal and the radio signal is emitted only if there is a fault in the installation portion.

4. Method according to one of the preceding claims,
**characterized**
**in that** the mobile display unit uses the received signal to ascertain an evaluation station associated with the installation portion sending the signal and forwards the signal or a transmission signal derived therefrom to the ascertained evaluation station.

5. Apparatus for presenting an image signal on the display of a mobile display unit, having
- a transmitter (S₁, ..., Sₙ) which is arranged on an installation portion (A₁, ..., Aₙ) of an industrial installation (A) and is provided for the purpose of sending a signal (s1, ..., sn) specifying the installation portion,
- a display unit (1) which has a display (2), user elements (3), a receiver (4) and a transmission and reception unit (6), wherein the receiver (4) is provided for the purpose of receiving the signals (s1, ..., sn) sent by the transmitter (S₁, ..., Sn) of the installation portion (A₁, ... Aₙ) and the transmission and reception unit (6) is provided for the purpose of automatically forwarding the received signal or a transmission signal derived therefrom to an evaluation station (8),
- the evaluation station (8) is provided for the purpose of receiving the signal sent by the display unit (1) and for the purpose of automatically sending information associated with the installation portion to the display unit (1), wherein
- the transmission and reception unit (6) of the display unit (1) is provided for the purpose of receiving the information sent by the evaluation station, and the display (2) is provided for the purpose of presenting an image signal corresponding to this information,
**characterized**
**in that** the display unit (1) has a collision detection component (5) which, in the event of reception of a plurality of different signals, automatically allocates the received signals different priorities, the priority allocation being configurable by a user using the user elements of the display unit.

6. Apparatus according to Claim 5,
**characterized**
**in that** the signal specifying the installation portion is a radio signal and contains a location identifier which contains information about the site of the installation portion in the industrial installation.

7. Apparatus according to one of Claims 5 and 6,
**characterized**
**in that** the transmitter emits the signal continually in pulsating fashion.

8. Apparatus according to one of Claims 5 and 6,
**characterized**
**in that** the transmitter emits the signal only if there is a fault.

9. Apparatus according to Claim 8,
**characterized**
**in that** the transmitter (S₁, ..., Sₙ) is part of a module (M₁, ..., Mₙ) and the module has a user element (T₁, ..., Tₙ) which can be used to change over the transmitter to various modes of operation, wherein a first of the modes of operation is continual pulsating sending of the signal and a second of the modes of operation is sending of the signal only if there is a fault.

10. Apparatus according to one of Claims 5 to 9,
**characterized**
**in that** the mobile display unit (1) has an evaluation unit (5) which uses the received signal to ascertain an evaluation station (8, 9, 10) associated with the installation portion sending the signal, and the transmission and reception unit (6) of the mobile display unit (1) is provided for the purpose of forwarding the signal or a transmission signal derived therefrom to the ascertained evaluation station.

## Revendications

1. Procédé de représentation d'un signal d'image sur l'affichage d'un appareil ( 1 ) d'affichage mobile, dans lequel
- l'appareil ( 1 ) d'affichage mobile a un des éléments ( 3 ) de service,
- un signal ( s1, ..., s6 ) est émis par un émetteur d'une partie ( A1, ..., An ) d'une installation ( A ) industrielle, signal qui spécifie la partie de l'installation,
- le signal émis est reçu par un récepteur ( 4 ) de l'appareil ( 1 ) d'affichage,
- le signal reçu ou un signal de transmission qui en est dérivé est acheminé automatiquement de l'appareil ( 1 ) d'affichage à un poste ( 8 ) d'évaluation,
- le poste ( 8 ) d'évaluation transmet automatiquement à l'appareil ( 1 ) d'affichage des informations appartenant à la partie de l'installation, et
- un signal d'image correspondant aux informations est représenté automatiquement sur l'affichage ( 2 ) de l'appareil ( 1 ) d'affichage,
**caractérisé en ce que**
- dans le cas d'une réception de plusieurs signaux différents émis par des émetteurs de parties différentes de l'installation, il est affecté automatiquement des priorités différentes aux signaux reçus, l'affectation des priorités pouvant être configurées par un opérateur au moyen des éléments de service de l'appareil d'affichage.

2. Procédé suivant la revendication 1,
**caractérisé en ce que** le signal spécifiant la partie de l'installation est un signal radio et le signal radio est émis constamment de manière pulsée.

3. Procédé suivant la revendication 1,
**caractérisé en ce que** le signal spécifiant la partie de l'installation est un signal radio et le signal radio n'est émis qu'en présence d'une panne de la partie de l'installation.

4. Procédé suivant l'une des revendications précédentes,
**caractérisé**
**en ce que**, dans l'appareil d'affichage mobile, on détermine au moyen du signal reçu un poste d'évaluation faisant partie de la partie de l'installation émettant le signal et le signal ou un signal de transmission qui en est dérivé est acheminé à ce poste d'évaluation déterminé.

5. Dispositif de représentation d'un signal d'image sur l'affichage d'un appareil d'affichage mobile comprenant
- un émetteur ( S1, ..., Sn ) qui est disposé sur une partie ( A1, ..., An ) d'une installation ( A ) industrielle et qui est prévue pour l'émission d'un signal ( s1, ..., sn ) spécifique à la partie d'installation,
- un appareil ( 1 ) d'affichage qui a un affichage ( 2 ), des éléments ( 3 ) de service, un récepteur ( 4 ) et une unité ( 6 ) d'émission et de réception, le récepteur ( 4 ) étant prévu pour recevoir des signaux ( s1, ..., sn ) émis par l'émetteur ( S1, ... , Sn ) de la partie ( A1, ..., An ) d'installation et l'unité ( 6 ) d'émission et de réception étant prévue pour acheminer automatiquement le signal reçu ou un signal de transmission en dérivant à un poste ( 8 ) d'évaluation,
- le poste ( 8 ) d'évaluation étant prévu pour recevoir le signal émis par l'appareil ( 1 ) d'affichage pour émettre automatiquement des informations faisant partie de la partie de l'installation vers l'appareil ( 1 ) d'affichage, dans lequel
- l'unité ( 6 ) d'émission et de réception de l'appareil ( 1 ) d'affichage est prévue pour recevoir les informations émises par le poste d'exploitation et l'affichage ( 2 ) est prévu pour la représentation d'un signal d'image correspondant à ces informations,
**caractérisé**
**en ce que** l'appareil ( 1 ) d'affichage a un composant ( 5 ) de reconnaissance de collision, qui dans le cas d'une réception de plusieurs signaux différents affecte automatiquement des priorités différentes aux signaux reçus, l'affectation de la priorité pouvant être configurée par un opérateur au moyen des éléments de service de l'appareil d'affichage.

6. Descriptif suivant la revendication 5,
**caractérisé en ce que**
le signal spécifiant la partie de l'installation est un signal radio et comporte une caractéristique de localisation qui contient des informations sur la localisation de la partie de l'installation industrielle.

7. Descriptif suivant l'une des revendications 5 ou 6,
**caractérisé en ce que**
l'émetteur émet le signal constamment de manière pulsée.

8. Descriptif suivant l'une des revendications 5 ou 6,
**caractérisé en ce que**
l'émetteur émet le signal en présence d'une panne.

9. Descriptif suivant la revendication 8,
**caractérisé en ce que**
l'émetteur ( S1, ..., Sn ) fait parti d'un module ( M1, .. ., Mn ) et le module a un élément ( T1, ..., Tn ) de service au moyen duquel l'émetteur peut être connecté dans des types de fonctionnement différents, un premier des types de fonctionnement étant une émulsion pulsée constante du signal et un deuxième des types de fonctionnement étant une émission du signal seulement en présence d'une panne.

10. Descriptif suivant l'une des revendications 5 à 9,
**caractérisé en ce que**
l'appareil ( 1 ) d'affichage mobile a une unité ( 5 ) d'exploitation qui au moyen du signal reçu, détermine un poste ( 8, 9, 10 ) d'exploitation faisant partie de la partie de l'installation émettant le signal et l'unité ( 6 ) d'émission et de réception de l'appareil ( 1 ) d'affichage mobile est prévue pour acheminer le signal ou un signal de transmission qui en est dérivé au poste d'exploitation déterminé.
